# EUROPEAN PATENT APPLICATION

(11) **EP 1 435 437 A1**
(43) Date of publication of application: **07.07.2004**
(21) Application number: 03019078.9
(22) Date of filing: 22.08.2003
(51) Int. Cl.: F01N 3/08, F01N 3/20, F01N 3/035

(54) **Improvements in or relating to a system and method for exhaust gas aftertreatment**

(30) Priority: 30.12.2002 US 330665
(71) Applicant: SOUTHWEST RESEARCH INSTITUTE, San Antonio Bexar County Texas (US)
(72) Inventor: Stanglmaier, Rudolf H., Fort Collins Colorado (US); Roberts, Charles E.J.R., San Antonio Texas (US); Roecker, Ryan C., San Antonio Texas (US); Stewart, Daniel W., Helotes, Bexar County Texas (US)
(74) Representative: Frankland, Nigel Howard

(57) **Abstract**

A very high efficiency NOₓ aftertreatment system for use in lean burn engines is disclosed. A lean NOₓ adsorber is fluidly connected to a selective catalytic reduction catalyst to use the ammonia formed within the NOₓ adsorber, during regeneration of the NOₓ adsorber while periodically operating the engine in a fuel-rich combustion mode, to reduce NOₓ remaining in the exhaust gas stream after passage through the NOₓ adsorber during normal operation of the engine in a lean burn combustion mode.

## Description

THIS INVENTION relates to a system and method for exhaust gas aftertreatment for an internal combustion engine and more particularly relates to an NOₓ aftertreatment system for a lean burn internal combustion engine.

Worldwide emissions regulations proposed for introduction during the next five to ten years will require that gasoline (petrol) and Diesel engines be equipped with some form of exhaust aftertreatment device. Perhaps of most concern to the Diesel engine industry are the proposed reductions in NOₓ (the various oxides of nitrogen) emissions, because they are most difficult to eliminate from the exhaust stream of fuel-lean, better known as lean burn, combustion. Lean burn gasoline and Diesel engines offer the benefits of higher thermal efficiency, but suffer from difficulty with NOₓ emissions. Nitrogen is present in the air we breathe, and in the air that an engine consumes. Nitrogen replaces the air by approximately 75%. Nitrogen does not burn, but it can oxidise at temperatures over 1370°C (2500°F). NOₓ ix is a health hazard and one of the EPA's primary emission problems.

Without a major advance in catalyst technology, automobiles using lean burn engines will not be able to meet current and projected emission standards. Two of the main candidate technologies being considered for use in Diesel engines are selective catalytic reduction (SCR) using urea or other means to generate ammonia, and lean NOₓ adsorber catalysts. Neither one of these technologies has yet demonstrated the ability to meet the very stringent U.S. 2007 standards. Moreover, both technologies have considerable drawbacks. Selective catalytic reduction currently requires that a urea/water mixture be carried on-board and injected into the exhaust system, or some other form of on-board bulk ammonia generation. If excessive urea is injected, excessive ammonia (NH₃) is generated and there is a possibility of emitting toxic ammonia into the atmosphere.

Lean NOₓ adsorber catalysts must be regenerated periodically by passing products of rich combustion through the adsorber. In order to obtain the highest NOₓ conversion efficiency possible, more rich products must be passed through the adsorber than are required to reduce the trapped NOₓ. However, this has recently been discovered to produce NH₃ in the exhaust stream. As noted above, NH₃ is toxic and must be prevented from being discharged into the atmosphere.

The only alternative heretofore has been to pass the gas containing NH₃ through an oxidation catalyst where it forms NO in the presence of an oxidising atmosphere. However, this is not desirable since the aim of the aftertreatment itself is to eliminate NO and NO₂ in the first place.

An alternative for regenerating NOₓ adsorption catalysts is proposed in U.S. Patent No. 6,176,079B1 issued January 23rd, 2001, to Konrad, *et al*. For a *PROCESS AND APPARATUS FOR REDUCING NITROGEN-OXIDE EMISSIONS IN EXHAUST GAS,* proposes using three serially connected catalyst units; a NOₓ adsorption catalyst followed by separate ammonia-producing and ammonia-adsorption catalysts. The process proposed by Konrad, *et al*. is directed at maximising the production of ammonia. In similar fashion, U.S. Patent No. 6,119,452 issued September 19th, 2000 to Kinugasa, *et* *al*., and more recently, U.S. Patent No. 6,338,244B1 issued January 15th, 2002, to Guenther, *et al*. are also directed to the intentional production of ammonia to optimise nitrogen-oxide emissions reduction. However, as noted above, ammonia is a toxic material and its release into the atmosphere must be prevented.

It is therefore an object of the present invention to provide an improved system and method for exhaust gas aftertreatment.

According to one aspect of this invention, there is provided an NOₓ aftertreatment system for a lean burn internal combustion engine having at least one combustion chamber and adapted to selectively operate normally in a lean burn combustion mode and periodically in a fuel rich combustion mode, said NOₓ aftertreatment system comprising:-
an exhaust system in fluid communication with said combustion chamber;
an NOₓ adsorber disposed in said exhaust system and having an inlet adapted to receive exhaust gases discharged from said combustion chamber and an outlet, said NOₓ adsorber being adapted to store at least a portion of NOₓ produced during normal operation of the engine in said lean burn combustion mode, and reduce said stored NOₓ and regenerate said NOₓ adsorber during periodic operation of the engine in said defined fuel rich combustion mode, said defined fuel rich combustion mode including continued operation of the engine in a fuel rich operating mode for a period of time sufficient to provide more products of combustion than are required to reduce the NOₓ stored in said NOₓ adsorber whereby a portion of the excess products of combustion form ammonia; and
a selective catalytic reduction catalyst disposed in said exhaust system and having an inlet in direct fluid communication with the outlet of said NOₓ adsorber, said selective catalytic reduction catalyst being adapted to store said ammonia formed during periodic operation of the engine in said rich combustion mode, so that during operation of the engine in said normal lean burn combustion mode said stored ammonia provides a reducing agent for NOₓ remaining in exhaust gases discharged from said combustion chamber.

Preferably, said selective catalytic reduction catalyst is adapted to react substantially all of said ammonia stored in the selective reduction catalyst with NOₓ remaining in said exhaust gases after passage of the exhaust gases through the NOₓ adsorber whereby the emission of ammonia from the exhaust system of said engine is prevented.

Conveniently, said exhaust system includes a particulate matter filter interposed between said combustion chamber and the inlet of said NOₓ adsorber.

Advantageously, said selective catalytic reduction catalyst has an outlet and said exhaust system includes a particulate matter filter in fluid communication with said outlet of the selective catalytic reduction catalyst.

Preferably, said engine has a turbocharger interposed in said exhaust system at a position between said combustion chamber and the inlet of said NOₓ adsorber.

According to another aspect of this invention, there is provided a method for reducing NOₓ emissions from a lean burn internal combustion engine, comprising:
operating the engine in a lean burn combustion mode;
storing NOₓ generated during operation of the engine in said lean burn combustion mode in a NOₓ adsorber positioned in an exhaust system of the engine;
periodically operating said engine in a defined fuel rich combustion mode, said fuel rich combustion mode including continued operation of the engine in a fuel rich operating mode for a period of time sufficient to provide more products of combustion than required to reduce the NOₓ stored in said NOₓ adsorber during operation of the engine in said lean burn combustion mode, whereby a portion of the excess products of combustion form ammonia;
storing said ammonia formed during said defined fuel rich operating mode of the engine in a selective catalytic reduction catalyst disposed in said exhaust system at a position downstream of NOₓ adsorber; and,
subsequently operating the engine in a lean burn combustion mode whereby NOₓ remaining in the exhaust gases during operation of the engine in said lean burn combustion mode after passage through said NOₓ adsorber are reduced in said selective catalytic reduction catalyst.

Preferably, said method includes passing exhaust gases discharged from a combustion of said engine through a particulate matter filter.

Conveniently, a portion of the fuel is burnt outside the combustion chamber, within the exhaust system, upstream from the NOₓ adsorber.

Advantageously, the exhaust gases pass through other emission control schemes or devices.

Preferably, the exhaust gases are recirculated.

It will be understood that the present inventors have sought to overcome the problems associated with the intentional production of ammonia as proposed by Konrad, *et al*., Kinugasa, *et al*., and Guenther, *et al*. It is desirable to have a high efficiency NOₓ aftertreatment system that does not require the intentional production of large amounts of ammonia which could be released into the atmosphere if the ammonia-adsorption catalyst becomes saturated. It is also desirable to have a high efficiency NOₓ aftertreatment system for use with lean burn engines that advantageously uses ammonia undesirably generated when the engine control system is optimised to the maximise the NOₓ conversion efficiency of the NOₓ adsorber system. This important feature of the present invention allows engine control systems to be tuned for the very high NOₓ conversion efficiency demanded by future engine emissions laws.

In one preferred embodiment an NOₓ aftertreatment system for a lean burn internal combustion engine is adapted to selectively operate normally in a lean burn combustion mode and periodically in a defined fuel-rich combustion mode.

The exhaust system of the engine is in fluid communication with at least one combustion chamber, a NOₓ adsorber and a selective reduction catalyst. The NOₓ adsorber is disposed in the exhaust system and is adapted to store at least a portion of NOₓ produced during operation of the engine in the lean burn combustion mode. The NOₓ stored in the NOₓ adsorber is reduced, and the NOₓ adsorber regenerated, during operation of the engine in the defined fuel-rich combustion mode. The defined fuel-rich combustion mode includes continued operation of the engine in a fuel-rich combustion mode for a period of time sufficient to provide more products of combustion than required to reduce the NOₓ stored in the NOₓ adsorber, whereby a portion of the excess products of combustion form ammonia. The selective reduction catalyst is also disposed in the exhaust system, downstream of the NOₓ adsorber, and is adapted to store ammonia formed during periodic operation of the engine in the defined rich combustion mode. During normal operation of the engine in the lean burn combustion mode, the stored ammonia provides a reducing agent for NOₓ remaining in the exhaust gases after passage through the NOₓ adsorber.

In another preferred embodiment, the NOₓ aftertreatment system includes a particulate matter filter disposed in the exhaust system of the NOₓ aftertreatment system.

The present invention also relates to a method for reducing NOₓ emissions from a lean burn internal combustion engine includes normally operating the engine in a lean combustion mode and storing NOₓ generated during operation of the engine in the lean combustion mode in an NOₓ adsorber positioned in the exhaust system of the engine. The preferred method further includes periodically operating the engine in a defined rich combustion mode that includes continued operation of the engine in a fuel-rich operating mode for a period of time sufficient to provide more products of combustion than required to reduce the NOₓ stored in the NOₓ adsorber during operation of the engine in the lean combustion mode. During the periodic operation of the engine in the defined fuel-rich combustion mode, a portion of the excess products of combustion forms ammonia. The ammonia formed during the defined fuel-rich operating mode is stored in a selective reduction catalyst disposed in the exhaust system downstream of the NOₓ adsorber so that during operation of the engine in the normal lean combustion mode, NOₓ remaining in the exhaust gases after passing through the NOₓ adsorber is reduced by the selective reduction catalyst.

Other features of the preferred method for reduced NOₓ emissions from a lean burn internal combustion engine include passing exhaust gases discharged from a combustion chamber of the engine through a particulate matter filter prior to discharge of exhaust gases into the atmosphere.

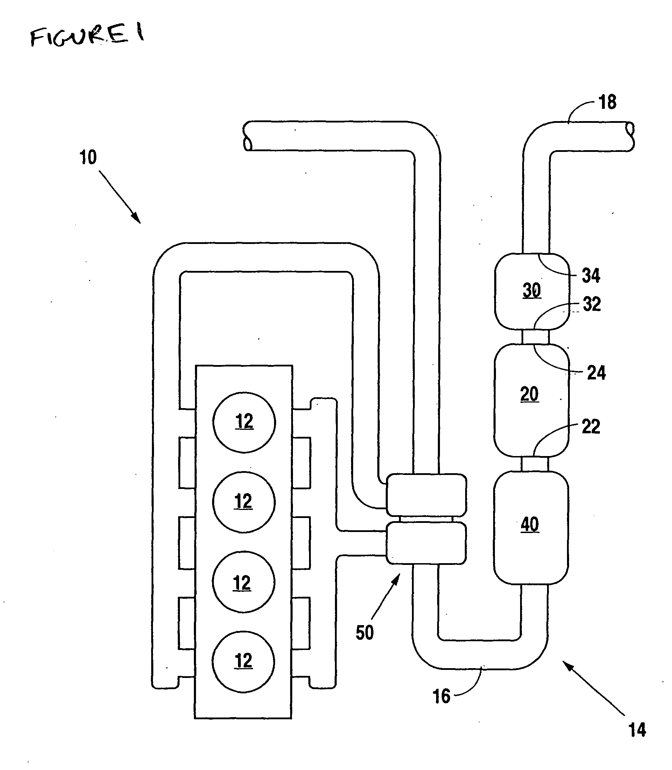

So that the invention may be more readily understood, and so that further features thereof may be appreciated, embodiments of the invention will now be described, by way of example, with reference to the accompanying drawings, in which:-
FIGURE 1 is a schematic representation of a lean burn combustion engine adapted to carry out high efficiency NOₓ adsorption from exhaust gases discharged from the engine during normal operation in a lean burn combustion mode.

The present invention seeks to reduce NOₓ emissions carried in the exhaust stream of lean burn engines. Lean burn engines are designed to operate with a very lean air-fuel ratio during light and medium load conditions. When full power is needed, such as during acceleration or hill climbing, a lean burn gasoline (petrol) engine typically reverts to a stoichiometric (14.7:1) ratio or richer. At idle, a Diesel engine may operate at air to fuel ratios in the 40 to 60:1 range. At full load, this ratio may drop to 18:1 (whilst producing smoke, indicating unburned fuel). Lean operation results in higher combustion efficiency and lower heat losses for better fuel economy. However, lean burn engines generally cannot meet the future strict NOₓ emissions standards using three-way or other oxidation catalyst technology. In order to meet the future NOₓ emissions standards, additional NOₓ controls, such as described below, will be required.

Referring to Figure 1, there is illustrated a lean burn engine 10 (Diesel, spark-ignited, or otherwise), which includes a plurality of combustion chambers 12, and an exhaust system 14. Operation of the lean burn engine 10 is controlled by a conventional programmable electronic engine control unit, not shown, to normally operate the engine 10 in a lean combustion mode, and selectively for purposes of aftertreatment regeneration, temporarily in a fuel-rich combustion mode. Fuel-rich combustion products for NOₓ adsorber regeneration can be achieved by providing a fuel-rich mixture of air and fuel to the combustion chambers 12, whereby fuel-rich combustion products are discharged from the combustion chambers 12 or, alternatively or in combination with, burning a portion of the fuel outside of the combustion chamber but within the exhaust system upstream of the NOₓ adsorber.

The term "fuel-rich combustion mode" means a mode in which "fuel is combusted, or burned, in the presence of insufficient air to support complete combustion of the fuel whether carried out within a combustion chamber of the engine or downstream of the combustion chamber at a position upstream of NOₓ adsorber." Downstream augmentation is a popular method for providing fuel-rich combustion products for regeneration of certain catalysts in Diesel engine applications.

The exhaust system 14 includes a conventional exhaust manifold 16, providing fluid communication of the exhaust system 14 with the combustion chambers 12, and a pipe 18 providing fluid communication of the exhaust system 14 with the ambient environment.

The exhaust system 14 also incorporates a lean NOₓ trap (LNT) 20, sometimes referred to as a NOₓ adsorber, having an inlet 22 adapted to receive exhaust gases discharged from the combustion chambers 12, and an outlet 24. Unlike catalysts which continually convert NOₓ to N₂, NOₓ adsorbers contain materials which store NOₓ under fuel lean conditions and release and catalytically reduce the stored NOx under fuel rich conditions. NO and NO₂ are acidic oxides and can be trapped on basic oxides typically provided in the NOₓ adsorber. More specifically, the LNT 20 chemically binds nitrogen oxides during lean engine operation.

After the adsorber capacity is saturated, the system is regenerated, whereby the released NOₓ is catalytically reduced during a period of fuel rich engine operation, i.e. during a period in which products of fuel-rich combustion are produced either within or outside of the combustion chamber. Furthermore, the LNT 20 is regenerated, i.e. operation of the engine 10 continued in the fuel-rich combustion mode for a length of time sufficient to provide more products of rich combustion than required to reduce the amount of NOₓ stored in the adsorber. During this process, some of the excess hydrogen and nitrogen are converted to ammonia (NH₃) with the adsorber.

The exhaust system 14 also incorporates selective catalytic reduction (SCR) catalyst 30 having an inlet 32 in direct communication with the outlet 24 of the LNT 20, and an outlet 34. As noted above, during regeneration of the LNT 20 more products of combustion are provided than required to reduce the NOₓ stored in the LNT 20. A portion of the excess products of combustion, containing hydrogen and nitrogen, are converted to ammonia (NH₃). The SCR catalyst 30 is placed following, i.e., downstream in the exhaust flow, the lean NOₓ adsorber 30 such that the NH₃ formed as a byproduct of regeneration of the LNT20 is deposited and temporarily held in the SCR catalyst 30. When normal lean operation of the engine is resumed, the NH₃ stored in the SCR catalyst 30 is used for reduction of the portion of the NOₓ that is not adsorbed by the lean NOₓ adsorber during normal lean operation. Hence, the NOₓ conversion efficiency of the aftertreatment system is improved (by regeneration of the NOₓ adsorber and by catalytic reduction), and the emission of toxic ammonia prevented.

Desirably, the exhaust system 14 also includes a particulate matter (PM) trap or filter 40 disposed in the exhaust system 14. Diesel particulate traps capture particle emissions through a combination of surface-type and deep-bed filtration mechanisms, such as diffusional deposition, inertial deposition, or flow-line interception. Collected particulates are periodically removed from the filter 40 through thermal regeneration. Diesel filters are very effective in controlling the solid part of particulate matter emissions.

Placement of the PM trap 40 upstream of the LNT20 in the SCR catalyst 30, as illustrated in the drawing, provides protection of the downstream treatment provides protection of the downstream treatment devices against PM (soot) contamination, particularly during operation of the engine 10 in the defined fuel-rich combustion mode. However, if desired, the PM trap 40 may be placed downstream of the LNT 20 in the SCR catalyst 30, at which position it will effectively reduce the amount of particulate matter discharged into the ambient environment.

It is also desirable for the engine 10 to have a turbocharger 50 to provide sufficient air to the combustion chambers 12 for lean burn combustion. In addition to increasing engine efficiency, turbocharging is particularly useful in gasoline (petrol) engine applications since gasoline (petrol) engines are typically throttled and may not have sufficient air flow to support lean burn combustion across the engine's entire sped and load range.

Thus, the preferred NOₓ aftertreatment system and method embodying the present invention provide a means for achieving high NOₓ conversion efficiency in the exhaust stream of a lean burn engine, whether it be Diesel, spark-ignited or otherwise, and prevents the emission of toxic ammonia to the atmosphere. The present invention advantageously does not require additional fluids to be carried onboard of the vehicle, since ammonia is produced from combustion byproducts. The preferred embodiment of the present invention provides an advancement in the technology required to achieve the proposed U.S. 2007 emissions standards.

Although the present invention is described in terms of preferred illustrative embodiments, those skilled in the art will recognise that actual system arrangements will be dependent upon the configuration and operating characteristics of a specific engine. For example, the aftertreatment system may include exhaust gas recirculation and/or other emission control schemes or devices to reduce exhaust gas emissions.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An NOₓ aftertreatment system for a lean burn internal combustion engine having at least one combustion chamber and adapted to selectively operate normally in a lean burn combustion mode and periodically in a fuel rich combustion mode, said NOₓ aftertreatment system comprising:-
an exhaust system in fluid communication with said combustion chamber;
an NOₓ adsorber disposed in said exhaust system and having an inlet adapted to receive exhaust gases discharged from said combustion chamber and an outlet, said NOₓ adsorber being adapted to store at least a portion of NOₓ produced during normal operation of the engine in said lean burn combustion mode, and reduce said stored NOₓ and regenerate said NOₓ adsorber during periodic operation of the engine in said defined fuel rich combustion mode, said defined fuel rich combustion mode including continued operation of the engine in a fuel rich operating mode for a period of time sufficient to provide more products of combustion than are required to reduce the NOₓ stored in said NOₓ adsorber whereby a portion of the excess products of combustion form ammonia; and
a selective catalytic reduction catalyst disposed in said exhaust system and having an inlet in direct fluid communication with the outlet of said NOₓ adsorber, said selective catalytic reduction catalyst being adapted to store said ammonia formed during periodic operation of the engine in said rich combustion mode, so that during operation of the engine in said normal lean burn combustion mode said stored ammonia provides a reducing agent for NOₓ remaining in exhaust gases discharged from said combustion chamber.

2. An NOₓ aftertreatment system according to claim 1, wherein said selective catalytic reduction catalyst is adapted to react substantially all of said ammonia stored in the selective reduction catalyst with NOₓ remaining in said exhaust gases after passage of the exhaust gases through the NOₓ adsorber whereby the emission of ammonia from the exhaust system of said engine is prevented.

3. An NOₓ aftertreatment system, according to any one of the preceding claims, wherein said exhaust system includes a particulate matter filter interposed between said combustion chamber and the inlet of said NOₓ adsorber.

4. An NOₓ aftertreatment system according to claim 1, 2 or 3, wherein said selective catalytic reduction catalyst has an outlet and said exhaust system includes a particulate matter filter in fluid communication with said outlet of the selective catalytic reduction catalyst.

5. An NOₓ aftertreatment system according to any one of the preceding claims, wherein said engine has a turbocharger interposed in said exhaust system at a position between said combustion chamber and the inlet of said NOₓ adsorber.

6. A method for reducing NOₓ emissions from a lean burn internal combustion engine, comprising:
operating the engine in a lean burn combustion mode;
storing NOₓ generated during operation of the engine in said lean burn combustion mode in a NOₓ adsorber positioned in an exhaust system of the engine;
periodically operating said engine in a defined fuel rich combustion mode, said fuel rich combustion mode including continued operation of the engine in a fuel rich operating mode for a period of time sufficient to provide more products of combustion than required to reduce the NOₓ stored in said NOₓ adsorber during operation of the engine in said lean burn combustion mode, whereby a portion of the excess products of combustion form ammonia;
storing said ammonia formed during said defined fuel rich operating mode of the engine in a selective catalytic reduction catalyst disposed in said exhaust system at a position downstream of NOₓ adsorber; and,
subsequently operating the engine in a lean burn combustion mode whereby NOₓ remaining in the exhaust gases during operation of the engine in said lean burn combustion mode after passage through said NOₓ adsorber are reduced in said selective catalytic reduction catalyst.

7. A method according to claim 6, wherein said method includes passing exhaust gases discharged from a combustion of said engine through a particulate matter filter.

8. A method according to claim 6 or 7, wherein a portion of the fuel is burnt outside the combustion chamber, within the exhaust system, upstream from the NOₓ adsorber.

9. A method according to any one of claims 6 to 8, wherein the exhaust gases pass through other emission control schemes or devices.

10. A method according to any one of claims 6 to 9, wherein the exhaust gases are recirculated.
